# EUROPEAN PATENT SPECIFICATION

(11) **EP 0 360 778 B1**
(45) Date of publication and mention of the grant of the patent: **24.04.1996**
(21) Application number: 89870136.2
(22) Date of filing: 22.09.1989
(51) Int. Cl.: H04N 7/16, H04N 7/167

(54) **A method and a device for jamming television signals**
Fernsehsignalstörungsverfahren und -einrichtung
Procédé et dispositif de brouillage de signaux de télévision

(30) Priority: 23.09.1988 CA 578353; 30.09.1988 US 251579
(43) Date of publication of application: 28.03.1990
(73) Proprietor: ELECTROLINE EQUIPMENT INC, Montreal, Quebec, H1Z 2W4 (CA)
(72) Inventor: Blais, Pierre, Montreal Quebec, H1Y 2X4 (CA)
(74) Representative: Smith, Philip Antony

(56) References cited:
- EP-A- 0 113 148

## Description

The invention relates to a method for jamming each of M (M>1) television signals of M television channels to be supplied via a controlled access medium to subscribers who are not allowed to receive at least one of said M television signals, each of said television signals comprising a horizontal synchronization signal and being modulated onto a dedicated carrier wave.

US Patent Specification US-A-4769838 describes such a method which comprises the following steps:-
generating M jamming signals of different frequencies, each of which is specific to one of the M channels,
combining the jamming signal for the i^{th} channel (1≤ i ≤M) with the carrier wave for that channel to create a jammed television signal,
transmitting the jammed television signal to all of the subscribers who are not allowed to receive the television signal which is being jammed
and applying the operations for the i^{th} channel to each of the other channels in turn in a time-division manner.

The US Specification US-A- 4769838, which is concerned with jamming non-permitted channels in a CATV system, also describes a device for carrying out this method.

A similar method and device are described in US Patent Specification US-A- 4,521,809. In that document the controlled access medium is formed by an antenna cable which is provided for distributing the television signals to subscribers. Those systems are generally designated by CATV (Cable Antenna Television). Many CATV systems charge different amounts to their various subscribers, depending on how many of the supplied channels the particular subscriber wants to receive. For example only, a CATV system may offer channels 1 through 12 inclusive. The charge for viewing channels 1 through 9 inclusive might be $Y.00 per month. The charge for viewing channels 1 through 9 inclusive plus also channel 10 might be $Y.00 + $10.00 per month. Accordingly, since all of the subscribers are connected to the same controlled access medium a means has to be found to selectively deny channels 10 and/or 11 and/or 12 to those subscribers who have not paid the additional charge(s).

The means for selectively combining each of the different jamming signals described in US-A- 4,521,809 are provided for outputting each of the different channels to be jammed with only those television signals going to the subscribers who are not authorized for that particular channel. Those means require one separate line per subscriber and one switch per subscriber per channel that might be jammed. The separate subscriber lines are each coupled to a different switch for each channel that might be jammed, thereby creating a switch and subscriber line matrix in which each subscriber line has a unique switch for each channel that might be jammed, controlling that subscriber's access to said channel, and in which all switches controlling subscriber access to a particular channel are connected to each other. Accordingly, if there are 1000 subscribers and 5 channels to be jammed, 1000 separate subscriber lines are needed, and (5 x 1000) = 5000 switches are required. Thus a large number of switches is required.

A drawback of the known system is thus that a large number of switches is required.

The other known means of selectively denying channels to selective subscribers is by selectively jamming the channels to be denied to the subscribers who have not paid for them. One known method of jamming channels is to send, along with the signal of each channel to be jammed, a signal having a repetition rate close to the vertical synchronization rate and of a greater amplitude than the vertical synchronization signal. The television will pick up the jamming signal as the synchronization signal and will therefore produce a vertically unstable picture. One problem with this means is that a vertically unstable picture is not as unwatchable as a horizontally unstable picture.

Another known means of jamming channels is to send, along with the signal of each channel to be jammed, a signal having a repetition rate close to the horizontal synchronization signal and of an amplitude greater than the horizontal synchronization signal. The television will pick up the jamming signal as the synchronization signal and will therefore produce a horizontally unstable picture.

An object of the present invention is to mitigate the drawbacks of the known method.

A method according to the invention is characterized in that the duration of each jamming signal is T/M where T is the time required to scan a normal horizontal line and in that the M jamming signals are generated by successively coupling M individual elements of a channel element bank with an oscillator circuit, each element of the channel element bank causing the oscillator circuit to generate a different jamming signal.

A device for carrying out the method of the invention is defined in Claim 5.

By each time selecting a different i-th channel and jamming the television signal of that i-th channel, each of the M channels are successively jammed for a well defined time period. Further by each time selecting those subscribers who are not allowed to receive the jammed i-th television channel, it is not necessary to form a matrix of switches, since one row of switches is enough for at each time supplying each i-th channel to the subscribers who are not allowed to receive the signal of that i-th channel. The successive selection of the channels and the successive selection of the subscribers for each channel allow a more efficient jamming with less complicated means and also to easily apply modifications among the subscribers to be selected.

A preferred embodiment of a method according to the invention is characterized in that a jamming signal is generated which has a time duration longer than the duration of a synchronization pulse of said horizontal synchronization signal. This enables the television receiver to consider the jamming signal as the horizontal synchronization signal and thus efficiently jam the television signal.

Preferably the jammed television signal is generated at a central station provided for supplying said television signals on said controlled access medium. All jamming operations are now realized starting from the central station which does not impose a visit at the subscribers home in order to install or modify CATV receiver.

A preferred embodiment of a device according to the invention is characterized in that said further selective means comprises a series of signal switches, an output of which being each time connected to an output of a television signal splitter circuit.

The invention will now be described in more details by means of a preferred embodiment shown in the drawing. It will be clear that the invention is not limited to the illustrated embodiment and that within the scope of the invention several modifications are possible. In the drawing same reference numbers are assigned to same or analogous elements.

In the drawing:

Figure 1 is a schematic diagram showing a preferred embodiment of an apparatus of the invention.

Figure 1A is a schematic diagram showing a preferred embodiment of an apparatus of the invention working in conjunction with a control means and television signal switches.

Figure 2 is an illustration showing the frequency spectrum of a television signal and indicating where the jamming signal of the invention would fall within that frequency spectrum.

Figure 3 is a timing diagram illustrating one possible time scheme for the invention when it has been set up to selectively jam six channels to selected subscribers.

Figure 4A is a schematic diagram of the master switch of the preferred embodiment of an apparatus according to the present invention.

Figure 4B is a schematic diagram showing the equivalent R.F. circuit of the master switch illustrated in Figure 4A, when that master switch is on.

Figure 4C is a schematic diagram showing the equivalent R.F. circuit of the master switch illustrated in Figure 4A, when that master switch is off.

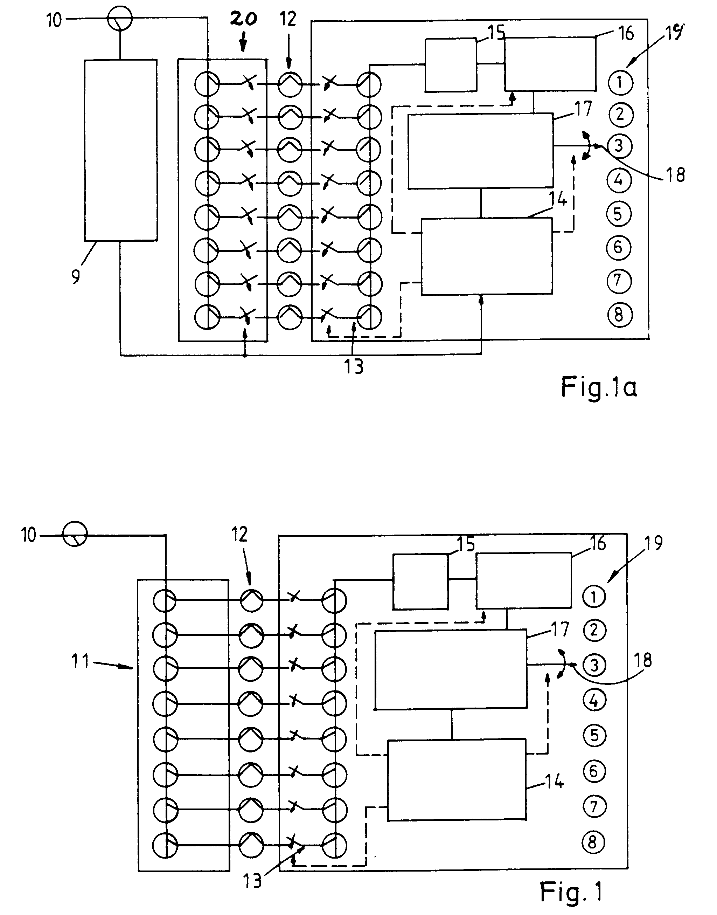

A preferred embodiment of a device according to the invention is illustrated in figure 1. The received television signal 10, carries all of the possible television channels the device is built to jam, and may also carry additional television channels. The device comprises a set of television signal splitter circuits 11, a set of jamming signal switches 13, a set of subscriber signal combiner modules 12, an oscillator circuit 17, a coupling means 18, a channel element bank 19 made up of a series of different elements each of which when connected to the oscillator circuit will cause it to put out a jamming signal suitable for jamming a different predetermined one of the television channels in the television signal 10, a master switch 16, a low pass filter 15 and a service control center 14.

In the illustrated device each of the television signal splitter circuits 11 receives the television signal 10. The set of jamming signal switches 13 is made up of N (where N is an integer) PIN Diodes RF switches. Each of the jamming signal switches receives the jamming signal. The set of subscriber connections 12 is made up of N signal combiner modules. In the preferred embodiment the signal combiner modules are constructed using splitter circuits. Each subscriber connection connects the signal being put out from that subscriber's television signal splitter circuit 11 and the signal being put out by that subscriber's jamming signal switch 13. Accordingly, when the subscriber's jamming signal switch is closed whatever channel is being jammed by the jamming signal will be jammed on that subscriber's television set.

In the preferred embodiment, the oscillator circuit is constructed using an LC (inductor-capacitor) circuit and the necessary components to produce a frequency modulated oscillating frequency. The oscillator circuit 17 puts out a burst of radio-frequency signals with a duration equal to the time T for a full horizontal line scan of one of the received channels divided by M, where M is an integer that is equal to the number of channels to be jammed. Accordingly, if the time T to scan a normal horizontal line is approximately 63.5µs, preferably the system is designed to jam at the most 8 channels.

Each of the elements in the channel element bank 19 is a further LC (inductor-capacitor) circuit. The inductor and capacitor of each element in the channel element bank is selected so as when that element is coupled to the oscillator circuit, the oscillator circuit will put out a frequency modulated jamming signal at a frequency higher than the carrier frequency of the television signal that element was installed to jam.

The coupling means 18 are formed by combination of switching PIN diodes. The coupling means 18 are able to couple anyone of the elements in the channel element bank with the oscillator circuit for a period of time at least as short as T/Mµs.

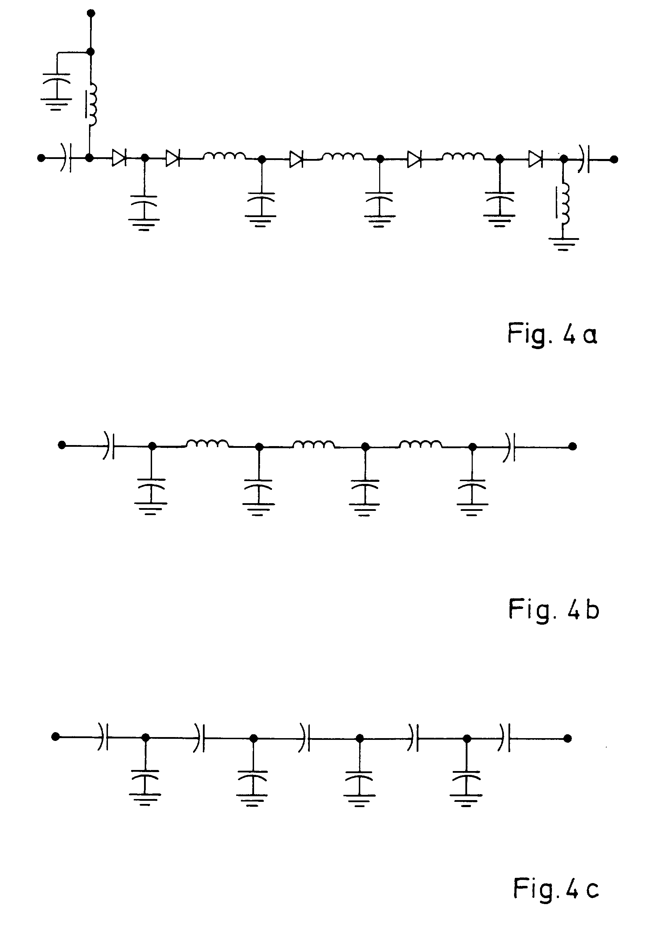

Figure 4A is a schematic diagram of the master switch 16 of the preferred embodiment. The master switch 16 is formed by a PIN diodes RF interruptor that has a controlled rise and fall time to minimize the generation of spurious products during switching. The Master Switch is made up of the following components: a grounded capacitor connected with an inductor (which is called an "RF Choke"); six additional capacitors; five diodes; and four additional inductors. A first capacitor, which is the input, is followed by a shunt RF Choke, followed by a series first diode, followed by a shunt second capacitor, followed by a series second diode, followed by a series first inductor, followed by a shunt third capacitor, followed by a series third diode, followed by a series second inductor, followed by a shunt fourth capacitor, followed by a series fourth diode, followed by a series third inductor, followed by a shunt fifth capacitor, followed by a series fifth diode, followed by a shunt fourth inductor, followed by a series sixth capacitor, which is the output. When the master switch is on, direct current flows through the diodes and they become conductive. The master switch is then the equivalent of a low pass filter having a cut-off frequency higher than the highest frequency of interest, the schematic diagram of that equivalent circuit is illustrated in figure 4B. When the master switch is switched off the current stops flowing through the PIN diodes and then each diode becomes like a small capacitor. The master switch is then the equivalent of a capacitive ladder attenuator, which equivalent circuit is illustrated in figure 4C.

The low pass filter 15 of the preferred embodiment is made up of capacitors and inductors. The purpose of the filter is to eliminate the harmonics from the oscillator and master switch circuit.

The service control center of the preferred embodiment is made up of a microprocessor with a ROM, RAM, logic I.C.'s, operational amplifiers and the necessary assorted inputs, outputs and standard circuitry necessary for operation. The service control center 14, when it first starts operating initializes the system by opening the master switch and opening all switches in the set of jamming signal switches and causing the coupling means to disconnect the oscillator circuit from any of the elements in the channel element bank. The service control center then causes the coupling means 18 to couple the first element in the channel element bank with the oscillator circuit for approximately T/Mµs (period 1). During the same period, the service control center closes the switches in the set of jamming signal switches 13, which connect to subscribers who are not authorized to receive the channel which therefore will be jammed. The service control center then, in period 1, causes the master switch to close for approximately T/Mµs. The service control center then at the end of period 1 causes the master switch to open. The service control center then causes the coupling means 18 to couple the second element in the channel element bank with the oscillator circuit for approximately T/Mµs (period 2). The service control center then, in period 2, causes the switches, in the set of jamming signal switches, which connect to subscribers who are not authorized to receive the channel which will be jammed by the jamming signal created when the second element in the channel element bank is coupled with the oscillator circuit, to be closed for approximately T/Mµs. The service control center then, in period 2, causes the master switch to close for approximately T/Mµs. The service control center then at the end of period 2 causes the master switch to open. The service control center then in different periods of T/Mµs each continues to perform the said series of operations, using the next element of the channel element bank in each period of T/Mµs until each of the elements in the channel element bank has been coupled one and only one time with the oscillator circuit. The service control center then starts the said cycle over again, and continues to start the cycle over again each time the cycle ends.

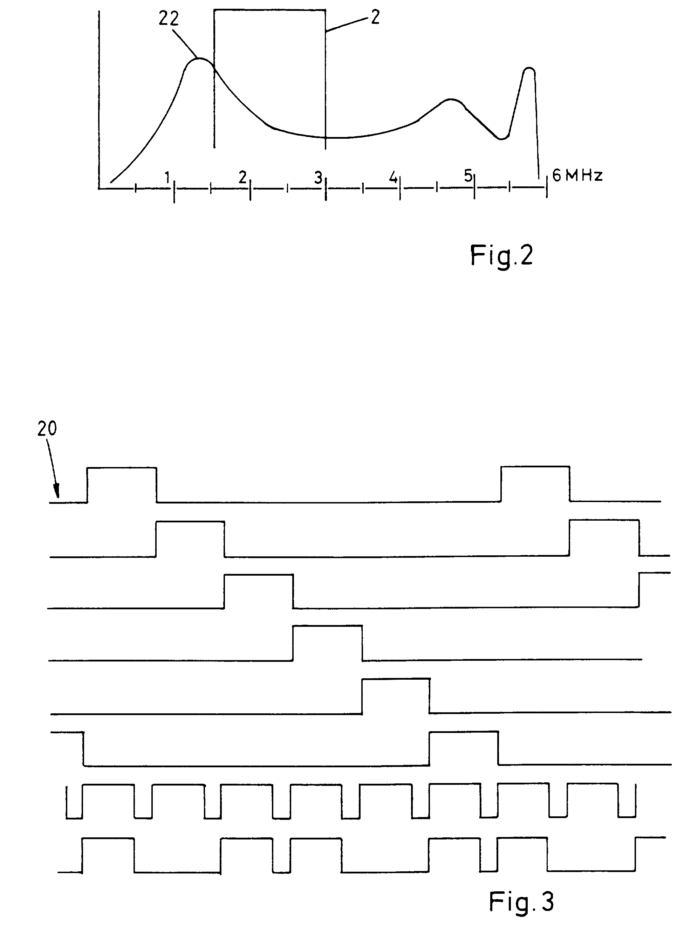

Figure 2 illustrates a typical television signal frequency spectrum including the jamming signal according to the invention. The horizontal axis represents the frequency while the vertical axis represents the amplitude. The jamming signal 2 has an amplitude greater than that of the horizontal synchronization signal 22 and is frequency modulated so that the frequency of the jamming signal is not constant. The jamming signal is therefore moving within the television channel's allocated band to assure a jamming that is more difficult to eliminate.

The television sets of the subscribers who have had a jamming signal added to their television signals, if tuned to the jammed channel, will therefore lock onto the jamming signal, since it is of a greater amplitude, instead of the proper horizontal synchronization signal. Accordingly, said subscriber's jammed channel will have a television picture that rolls and distorts, and will have impaired sound of the television program.

In the preferred embodiment a very effective jamming of each of the channels to be jammed is achieved, and only one set of jamming signal switches is required per subscriber. Access to the subscriber's home is not needed for supplying a jammed signal nor to modify the channel to be jammed. Subscribers can easily be added to the system as each subscriber need only be connected to the system by one subscriber connection and one set of jamming signal switches, accordingly, to add on an additional subscriber all that is needed is to add on to the end of the linear series of subscriber connections and jamming signal switches, one additional subscriber connection and one addition jamming signal switch.

It is possible that the invention and especially the preferred embodiment of a device of the invention will be used in conjunction with a control means and with television signal switches instead of television signal splitter circuits. Figure 1A illustrates a further embodiment of a device according to the invention and working in conjunction with a control means 9 and with television signal switches 20. In operation the television signal 10 has sent along with it coded information indicating to the control means 9 which television signal switches 20 should be turned on, and to which subscribers jammed signals have to be transmitted. The construction of a control means able to receive coded information indicating which television signal switches to turn on, and which subscribers should receive jammed channels, and able to turn on the appropriate television signal switches and able to inform the Service Control Center which subscribers should receive their jammed channels, is well known by those skilled in the art. The television signal switches would also be well known to those skilled in the art and could, for example only, be PIN Diodes RF switches or RF relay switches.

When the preferred embodiment of an apparatus according to the invention is used in conjunction with a control means and with television signal switches it is very simple for a CATV operator to deny certain channels to certain subscribers from the head end. The CATV operator merely enters the appropriate information into the system at the head end. The information is then transmitted along with the television signal to the control means, which decodes that information and provides it to the service control center. The service control center then causes the appropriate subscribers' jamming signal switches to close at the appropriate times and the appropriate jamming signals are combined to those subscribers received television signals, thus denying them the appropriate channels.

Variations to the preferred embodiment can easily be made. The signal combiner modules could be constructed using directional couplers instead of splitter circuits as is used in the preferred embodiment. The switches of the set of jamming signal switches, could for example only, be RF Ga As FET switches instead of PIN Diodes RF switches as are used in the preferred embodiment. The master switch, for example only, instead of being constructed as described for the preferred embodiment, could be constructed using a Ga As FET RF switch assembly.

Additional variations to the preferred embodiment are also possible, the following are only a few additional examples. The oscillator circuit, coupling means and channel element bank could be replaced by using M independent oscillator circuits, each putting out a different jamming signal. The LC elements of the preferred embodiment could be replaced with quartz crystals, or with a ceramic resonator, or a saw resonator

Finally, many alternative ways to construct the service control center and some of its components will be clear to those skilled in the art.

## Claims

1. A method for jamming each of M (M>1) television signals of M television channels to be supplied via a controlled access medium to subscribers who are not allowed to receive at least one of said M television signals, each of said television signals comprising a horizontal synchronization signal and being modulated onto a dedicated carrier wave, said method comprising the following steps:-
generating M jamming signals of different frequencies, each of which is specific to one of the M channels,
combining the jamming signal for the i^{th} channel (1≤ i ≤M) with the carrier wave for that channel to create a jammed television signal,
transmitting the jammed television signal to all of the subscribers who are not allowed to receive the television signal which is being jammed
and applying the operations for the i^{th} channel to each of the other channels in turn in a time-division manner
characterized in that the duration of each jamming signal is T/M where T is the time required to scan a normal horizontal line and in that the M jamming signals are generated by successively coupling M individual elements of a channel element bank with an oscillator circuit, each element of the channel element bank causing the oscillator circuit to generate a different jamming signal.

2. A method as claimed in claim 1, characterized in that the jamming signals generated have a time duration longer than the duration of a synchronization pulse of said horizontal synchronization signal.

3. A method as claimed in claim 1 or 2, characterized in that frequency modulated jamming signals are generated.

4. A method as claimed in claims 1, 2 or 3, characterized in that said jammed television signal is generated at a central station provided for supplying said television signals on said controlled access medium.

5. A device for jamming each of M (M>1) television signals of M television channels to be supplied via a controlled access medium to subscribers who are not allowed to receive at least one of said M television channels, each of said television signals comprising a horizontal synchronization signal and being modulated onto a dedicated carrier wave, said device comprising:
an oscillator for generating M jamming signals of different frequencies, each of which is specific to one of the M channels,
a combining means for selectively combining the jamming signal for the i^{th} channel (1≤i≤M) with the carrier wave for that channel to create a jammed television signal, and
means for transmitting the jammed television signal to all of the subscribers who are not allowed to receive the television signal which is being jammed,
characterized by a channel element bank and means for successively coupling each of M elements of the channel element bank to the oscillator for a period of T/M, where T is the time required to scan a normal horizontal line, each element of the channel element bank causing the oscillator to generate a different jamming frequency.

6. A device as claimed in claim 5, characterized in that each jamming signal has a time duration longer than the duration of a synchronization pulse of said horizontal synchronization signal.

7. A device as claimed in claims 5 or 6, characterized in that said jamming signal is a frequency modulated signal.

8. A device as claimed in claim 5, 6 or 7, in which said oscillator produces a frequency modulated oscillating frequency, and in which said M channel elements are M separate inductor-capacitor circuits, and in which said coupling means is a combination of switching PIN diodes.

9. A device as claimed in any of claims 5 to 8, in which said combining means is a set of PIN diode RF switches.

## Patentansprüche

1. Verfahren zum Stören eines jeden M-(M>1)-Fernsehsignals von M-Fernsehkanälen, die über ein gesteuertes Zugriffsmedium an Teilnehmer weitergeleitet werden sollen, die nicht dazu berechtigt sind, zumindest eines der M-Fernsehsignale zu empfangen, wobei jedes der Fernsehsignale ein horizontales Synchronisationssignal umfaßt und auf eine zugeordnete Trägerwelle moduliert wird, wobei das Verfahren die folgenden Schritte umfaßt:
- Erzeugen von M-Störsignalen verschiedener Frequenzen, von denen jedes für einen der M-Kanäle spezifisch ist,
- Kombinieren des Störsignals für den i-Kanal (1≤ i ≤M) mit der Trägerwelle für diesen Kanal, um ein Fernseh-Störsignal zu erzeugen,
- Übertragen des Fernseh-Störsignals an alle Teilnehmer, die nicht dazu berechtigt sind, das zu störende Fernsehsignal zu empfangen, und
- Anwenden der Vorgehensweise beim i-Kanal auf jeden der anderen Kanäle, und zwar wiederum auf Zeitmultiplex-Weise, dadurch gekennzeichnet, daß die Dauer eines jeden Störsignals T/M beträgt, wobei T die Zeit ist, die erforderlich ist, um eine normale horizontale Zeile abzutasten, und dadurch, daß die M-Störsignale durch sukzessives Verbinden der M-Einzelelemente einer Kanal-Elementanordnung mit einem Schwingkreis erzeugt werden, wobei jedes Element der Kanal-Elementanordnung den Schwingkreis veranlaßt, ein anderes Störsignal zu erzeugen.

2. Verfahren nach Anspruch 1,
dadurch gekennzeichnet, daß die erzeugten Störsignale eine längere Zeitdauer haben als ein Synchronisationspuls des horizontalen Synchronisationssignals.

3. Verfahren nach Anspruch 1 oder 2,
dadurch gekennzeichnet, daß frequenzmodulierte Störsignale erzeugt werden.

4. Verfahren nach Anspruch 1, 2 oder 3,
dadurch gekennzeichnet, daß das Fernseh-Störsignal in einer Zentralstation zur Bereitstellung der Fernsehsignale auf dem gesteuerten Zugriffsmedium erzeugt wird.

5. Vorrichtung zum Stören eines jeden M-(M>1)-Fernsehsignals von M-Fernsehkanälen, die über ein gesteuertes Zugriffsmedium an Teilnehmer weitergeleitet werden sollen, die nicht dazu berechtigt sind, zumindest einen der M-Fernsehkanäle zu empfangen, wobei jedes der Fernsehsignale ein horizontales Synchronisationssignal umfaßt und auf eine zugeordnete Trägerwelle moduliert wird, wobei die Vorrichtung folgendes umfaßt:
- einen Oszillator zum Erzeugen von M-Störsignalen verschiedener Frequenzen, von denen jedes für einen der M-Kanäle spezifisch ist,
- eine Kombinierungseinrichtung zum selektiven Kombinieren des Störsignals für den i-Kanal (1≤ i ≤M) mit der Trägerwelle für diesen Kanal, um ein Fernseh-Störsignal zu erzeugen, und
- eine Einrichtung zum Übertragen des Fernseh-Störsignals an alle Teilnehmer, die nicht dazu berechtigt sind, das zu störende Fernsehsignal zu empfangen,
gekennzeichnet durch eine Kanal-Elementanordnung und eine Einrichtung zum sukzessives Verbinden eines jeden M-Elementes der Kanal-Elementanordnung mit dem Oszillator für den Zeitraum T/M, wobei T die Zeit ist, die erforderlich ist, um eine normale horizontale Zeile abzutasten, wobei jedes Element der Kanal-Elementanordnung den Oszillator veranlaßt, eine andere Störfrequenz zu erzeugen.

6. Vorrichtung nach Anspruch 5,
dadurch gekennzeichnet, daß jedes Störsignal eine längere Zeitdauer hat als ein Synchronisationspuls des horizontalen Synchronisationssignals.

7. Vorrichtung nach Anspruch 5 oder 6,
dadurch gekennzeichnet, daß das Störsignal ein frequenzmoduliertes Signal ist.

8. Vorrichtung nach Anspruch 5, 6 oder 7,
wobei der Oszillator eine frequenzmodulierte Schwingfrequenz erzeugt, wobei die M-Kanalelemente M-separate Induktivitäts-Kapazitätsschaltkreise sind und wobei die Verbindungseinrichtung eine Kombination aus PIN-Schaltdioden ist.

9. Vorrichtung nach einem der Ansprüche 5 bis 8,
wobei die Kombinierungseinrichtung ein Satz PIN-Dioden-RF-Schalter ist.

## Revendications

1. Procédé pour brouiller chacun des M (M>1) signaux de télévision de M canaux de télévision destinés à être délivrés par l'intermédiaire d'un support à accès contrôlé à des abonnés qui ne sont pas autorisés à recevoir au moins l'un desdits M signaux de télévision, chacun desdits signaux de télévision comprenant un signal de synchronisation horizontale, et étant modulé sur une onde porteuse dédiée, ledit procédé comprenant les étapes suivantes:-
génération de M signaux de brouillage de fréquences différentes, chacun d'entre eux étant spécifique pour l'un des M canaux,
association du signal de brouillage pour le i-ième canal (1 ≤ i ≤ M) à l'onde porteuse pour ce canal, afin de créer un signal de télévision brouillé,
transmission du signal de télévision brouillé à tous les abonnés qui ne sont pas autorisés à recevoir le signal de télévision qui est brouillé
et application des opérations pour le i-ième canal à chacun des autres canaux à son tour, d'une manière à division dans le temps
caractérisé en ce que la durée de chaque signal de brouillage est T/M, T étant le temps requis pour balayer une ligne horizontale normale, et en ce que les M signaux de brouillage sont générés en couplant successivement M éléments individuels d'un groupe d'éléments de canal avec un circuit oscillateur, chaque élément du groupe d'éléments de canal faisant générer par le circuit oscillateur un signal de brouillage différent.

2. Procédé selon la revendication 1, caractérisé en ce que les signaux de brouillage générés ont une durée supérieure à la durée d'une impulsion de synchronisation dudit signal de synchronisation horizontal.

3. Procédé selon la revendication 1 ou 2, caractérisé en ce que des signaux de brouillage modulés en fréquence sont générés.

4. Procédé selon la revendication 1, 2 ou 3, caractérisé en ce que ledit signal de télévision brouillé est généré en une station centrale prévue pour délivrer lesdits signaux de télévision sur ledit support à accès contrôlé.

5. Dispositif pour brouiller chacun des M (M>1) signaux de télévision de M canaux de télévision destinés à être délivrés par l'intermédiaire d'un support à accès contrôlé à des abonnés qui ne sont pas autorisés à recevoir au moins l'un desdits M signaux de télévision, chacun desdits signaux de télévision comprenant un signal de synchronisation horizontale, et étant modulé sur une onde porteuse dédiée, ledit dispositif comprenant:
un oscillateur pour générer M signaux de brouillage de fréquences différentes, chacun d'entre eux étant spécifique pour l'un des M canaux,
un moyen d'association pour associer de façon sélective le signal de brouillage pour le i-ième canal (1 ≤ i ≤ M) à l'onde porteuse pour ce canal, afin de créer un signal de télévision brouillé, et
un moyen pour transmettre le signal de télévision brouillé à tous les abonnés qui ne sont pas autorisés à recevoir le signal de télévision qui est brouillé,
caractérisé par un groupe d'éléments de canal et un moyen pour coupler successivement M éléments individuels du groupe d'éléments de canal à l'oscillateur pendant une durée T/M, T étant le temps requis pour balayer une ligne horizontale normale, chaque élément du groupe d'éléments de canal faisant générer par le circuit oscillateur un signal de brouillage différent.

6. Dispositif selon la revendication 5, caractérisé en ce que chaque signal de brouillage a une durée supérieure à la durée d'une impulsion de synchronisation dudit signal de synchronisation horizontale.

7. Dispositif selon la revendication 5 ou 6, caractérisé en ce que ledit signal de brouillage est un signal modulé en fréquence.

8. Dispositif selon la revendication 5, 6 ou 7, dans lequel ledit oscillateur produit une fréquence d'oscillation modulée en fréquence, et en ce que lesdits M éléments de canaux sont M circuits inductance-condensateur séparés, et en ce que ledit moyen de couplage est une association de diodes PIN de commutation.

9. Dispositif selon l'une quelconque des revendications 5 à 8, dans lequel ledit moyen d'association est un ensemble de commutateurs RF à diodes PIN.
